# EUROPÄISCHE PATENTSCHRIFT

(11) **EP 2 871 481 B1**
(45) Veröffentlichungstag und Bekanntmachung des Hinweises auf die Patenterteilung: **06.07.2016**
(21) Anmeldenummer: 14188093.0
(22) Anmeldetag: 08.10.2014
(51) Int. Cl.: G01N 35/00, G01N 35/04

(54) **Bewegungsvorrichtung mit kombiniertem Individual- und Blockbewegungsantrieb für mehrere gemeinsam geführte Bewegungseinheiten**
Movement device with combined individual and block movement drive for multiple jointly guided moving units
Dispositif de déplacement avec entraînement par déplacement individuel et en bloc combiné pour plusieurs unités de déplacement déplacées ensemble

(30) Priorität: 10.10.2013 DE 102013220427
(43) Veröffentlichungstag der Anmeldung: 13.05.2015
(73) Patentinhaber: Hamilton Bonaduz AG, 7402 Bonaduz (CH)
(72) Erfinder: Nawrocki, Eduard, 7402 Bonaduz (CH)
(74) Vertreter: RLTG

(56) Entgegenhaltungen:
- EP-A2- 2 410 342
- US-A1- 2006 088 443

## Beschreibung

Die vorliegende Erfindung betrifft eine Linearbewegungsvorrichtung mit zwei oder mehr Linearbewegungseinheiten, welche längs einer gemeinsamen Linearbewegungsachse beweglich geführt sind, gemäß dem Oberbegriff von Anspruch 1.

Eine gattungsgemäße Linearbewegungsvorrichtung ist aus der US 2006/0088443 A1 bekannt.

Die Linearbewegungsvorrichtung der vorliegenden Erfindung umfasst dagegen einen kombinierten Block- und Individualantrieb, welcher dazu ausgebildet ist, die zwei oder mehr Linearbewegungseinheiten sowohl als Block gemeinsam längs der Linearbewegungsachse - also ohne Relativbewegung zueinander - als auch mit einer Relativbewegung relativ zueinander längs der Linearbewegungsachse zu bewegen.

Die Linearbewegungseinheiten sind vorzugsweise Träger von Pipettierkanälen und somit Teil einer Pipettiervorrichtung. Die vorliegende Erfindung betrifft daher auch eine Pipettiervorrichtung mit einer Linearbewegungvorrichtung, wie sie nachfolgend beschrieben ist.

Eine derartige Block- und Individualantriebsvorrichtung ist an Pipettiervorrichtungen mit mehreren sowohl individuell getrennt voneinander, als auch im Block gemeinsam miteinander bewegbaren Pipettierkanälen bekannt.

Bekannt sind abweichend von der oben definierten gattungsgemäßen kombinierten Block- und Individualantriebsvorrichtung auch einzeln linearmotorisch angetriebene Pipettierkanäle, von denen jeder einen gesondert betreibbaren Läufer aufweist, wobei mehrere oder sogar alle Läufer auf einem gemeinsamen Stator laufen. Diese Pipettierkanäle, oder allgemein: Linearbewegungseinheiten, sind durch unterschiedliche Betriebsarten der linearmotorischen Antriebe gemeinsam im Block oder einzeln antreibbar.

Aus der EP 2410342 A2 ist eine Pipettiervorrichtung mit einer Mehrzahl von längs einer dort als "Y-Achse" bezeichneten gemeinsamen Linearbewegungsachse bewegbaren Pipettierkanälen bekannt. Jeder Pipettierkanal ist mit einem eigenen Bewegungsantrieb für die Bewegung längs der gemeinsamen Linearbewegungsachse ausgestattet.

Aus der nachveröffentlichten DE 10 2012 216 544.4 ist weiterhin eine kombinierte Block- und Individualantriebsvorrichtung bekannt, bei welcher ein Blockbewegungsübertragungsgetriebe eine parallel zur Linearbewegungsachse verlaufende Antriebsspindel und bei welchen weiter jede Linearbewegungseinheit eine von der Antriebsspindel durchsetzte Spindelmutter aufweist. In an sich bekannter Weise können dabei die Linearbewegungseinheiten durch Drehen der Antriebsspindel um ihre Antriebsspindellängsachse relativ zu den einzelnen Spindelmuttern als Block gemeinsam relativ zur Antriebsspindel längs der Antriebsspindellängsachse bewegt werden. Über eine gesonderte Antriebswelle mit darauf drehfest aber axial verschieblich gelagerten Gleitsteinen, welche mit den Spindelmuttern in kämmendem Eingriff stehen und welche mit den Linearbewegungseinheiten gekoppelt sind, können die Linearbewegungseinheiten mit Relativbewegung zueinander längs der Linearbewegungsachse bewegt werden.

Kombinierte Block- und Individualantriebsvorrichtungen sind insbesondere an Pipettiervorrichtungen vorteilhaft, bei welchen längs der Bewegungsbahn bzw. Linearbewegungsachse hintereinander angeordnete Pipettierkanäle als die Linearbewegungseinheiten in einem vorbestimmten Abstand als gemeinsam bewegbarer Block längs der Bewegungsbahn ohne relative Abstandsänderung bewegbar sind. Fallweise kann eine Änderung des Abstands längs der Bewegungsbahn zwischen den einzelnen Pipettierkanälen, bzw. allgemein: Linearbewegungseinheiten, erforderlich sein, beispielsweise dann, wenn Flüssigkeit aus einer oder in eine Titerplatte zu pipettieren ist, bei welcher üblicherweise als "Wells" bezeichnete Vertiefungen zur Flüssigkeitsaufnahme einen anderen Abstand aufweisen als bei anderen, mit der gleichen Pipettiervorrichtung zu anderen Zeitpunkten bearbeiteten Titerplatten. Eine derartige Individualbewegung der Pipettierkanäle, bzw. allgemein Linearbewegungseinheiten, zur Änderung des Abstands längs der Bewegungsbahn zwischen ihnen wird in der vorliegenden Anmeldung auch als "Spreizbewegung" bezeichnet werden.

Aufgabe der vorliegenden Erfindung ist es, eine Linearbewegungsvorrichtung der eingangs genannten Art anzugeben, welche mit lediglich zwei Linearantrieben die zwei oder mehr Linearbewegungseinheiten sowohl blockweise ohne Relativgeschwindigkiet untereinander längs der gemeinsamen Linearbewegungsachse zur Bewegung antreiben kann als auch die zwei oder mehr Linearbewegungseinheiten mit einer Relativgeschwindigkeit relativ zueinander zur Bewegung längs der Linearbewegungsachse zur Bewegung antreiben kann.

Diese Aufgabe wird gemäß einem ersten allgemeinen Erfindungsgedanken gelöst durch eine Linearbewegungsvorrichtung mit wenigstens zwei Linearbewegungseinheiten, welche längs einer gemeinsamen Linearbewegungsachse beweglich geführt sind, wobei die Linearbewegungsvorrichtung einen ersten Linearantrieb und einen zweiten Linearantrieb derart aufweist, dass jede Linearbewegungseinheit sowohl nur durch den ersten Linearantrieb als auch nur durch den zweiten Linearantrieb als auch durch beide Linearantriebe gemeinsam zur Bewegung längs der Linearbewegungsachse antreibbar ist, wobei der erste und der zweite Linearantrieb derart Antriebskraft übertragend mit den Linearbewegungseinheiten gekoppelt sind, dass bei Aktivierung nur des ersten Linearantriebs oder nur des zweiten Linearantriebs die Linearbewegungseinheiten zur Bewegung in eine gemeinsame Richtung längs der Linearbewegungsachse mit Relativgeschwindigkeit zueinander antreibbar sind, während bei gleichzeitiger Aktivierung des ersten und des zweiten Linearantriebs alle Linearbewegungseinheiten wenigstens zur gleichgerichteten gemeinsamen Bewegung längs der Linearbewegungsachse ohne Relativgeschwindigkeit zueinander antreibbar sind.

Zwar ist es bevorzugt, dass die Linearbewegungsachse eine geradlinige Bahn im mathematisch strengen Sinne einer Achse beschreibt. Jedoch soll nicht ausgeschlossen sein, dass die Linearbewegungsachse längs einer einfach oder mehrfach gekrümmten Bahn verläuft, so dass im allgemeinsten Sinne mit "Linearbewegungsachse" eine beliebige Bewegungsbahn gemeint ist.

Es soll grundsätzlich nicht ausgeschlossen sein, dass mehr als die zwei oben genannten Linearantriebe an einer Linearbewegungsvorrichtung vorgesehen sind. Jedoch ist die Erfindung dann besonders vorteilhaft, weil mit der geringstmöglichen Anzahl an Linearantrieben auskommend, wenn die Linearbewegungsvorrichtung genau zwei Linearantriebe aufweist.

Dabei ist jeder der zwei genannten Linearantriebe für sich alleine genommen derart mit den zwei oder mehr Linearbewegungseinheiten gekoppelt, dass dann, wenn nur der erste oder nur der zweite Linearantrieb aktiviert ist und der jeweils andere Linearantrieb nicht aktiviert ist, die zwei oder mehr Linearbewegungseinheiten sich gemeinsam in der gleichen Richtung längs der Linearbewegugsachse bewegen, jedoch dabei unterschiedliche Absolutgeschwindigkeiten bezogen auf ein führungs- bzw. gestellfestes Koordinatensystem aufweisen, welches relativ zu einer die Linearbewegungseinheiten längs der Linearbewegungsachse führenden Linearführung ruht. Mit anderen Worten: Bei dieser Antriebsart weisen die zwei oder mehr Linearbewegungseinheiten eine Relativgeschwindigkeit relativ zueinander auf. Diese Betriebsart wird nachfolgend als "Individualbewegung" bezeichnet.

Dann jedoch, wenn der erste und der zweite Linearantrieb gleichzeitig in einer vorbestimmten Weise aktiviert sind, sind die zwei oder mehr Linearbewegungseinheiten zur gemeinsamen Bewegung in eine gemeinsame Bewegungsrichtung längs der Linearbewegungsachse mit jeweils gleicher Absolutgeschwindigkeit, d. h. ohne Relativgeschwindigkeit relativ zueinander, antreibbar. Diese Betriebsart eines Bewegungsantriebs ohne Relativgeschwindigkeit der Linearbewegungseinheiten untereinander wird im Folgenden als "Blockbewegung" oder dergleichen bezeichnet. Dies soll nicht ausschließen, dass die Linearbewegungseinheiten bei gleichzeitiger Aktivierung sowohl des ersten als auch des zweiten Linearantriebs auch in anderer als in der eine Blockbewegung kennzeichnenden Bewegung in gleicher Richtung mit gleicher Geschwindigkeit antreibbar sind. Jedenfalls soll diese Blockbewegung durch gleichzeitige Aktivierung beider Linearantriebe bewirkbar sein.

Zusätzlich zu der oben genannten Individualbewegungsbetriebsart und der oben genannten Blockbewegungsbetriebsart kann vorgesehen sein, dass abhängig von dem jeweiligen Betriebszustand der beiden Linearantriebe wenigstens alle Linearbewegungseinheiten bis auf eine zur Bewegung mit Relativgeschwindigkeit zueinander längs der Linearbewegungsachse antreibbar sind.

Da, wie oben beschrieben wurde, die zwei oder mehr Linearbewegungseinheiten sowohl durch den ersten, als auch durch den zweiten Linearantrieb zu einer Individualbewegung, also zu einer Bewegung längs der Linearbewegungsachse mit Relativgeschwindigkeit untereinander, antreibbar sind, können die beiden Linearantriebe so betrieben werden, dass sich für genau eine Linearbewegungseinheit aus den zwei oder mehr Linearbewegungseinheiten die von den beiden Linearantrieben übertragenen Antriebsbewegungen gegenseitig aufheben. Diese Linearbewegungseinheit, für die die Aufhebungsbedingung der Antriebsbewegungen gilt, steht somit relativ zum führungsfesten Koordinatensystem und damit relativ zur Linearführung der Linearbewegungseinheiten still, während alle andere Linearbewegungseinheiten relativ zur stillstehenden Linearbewegungseinheit und relativ zu den übrigen Linearbewegungseinheiten eine Relativgeschwindigkeit aufweisen.

Durch entsprechende Wahl der Betriebsparameter der beiden aktivierten Linearantriebe kann ein theoretischer Stillstandspunkt, für welchen sich die von beiden Linearantrieben übertragenen Antriebsbewegungen sich gegenseitig aufheben, ein zwischen den Linearbewegungseinheiten gelegener theoretischer Ort sein, so dass nicht nur alle Linearbewegungseinheiten bis auf eine, sondern tatsächlich alle Linearbewegungseinheiten zur Bewegung mit Relativgeschwindigkeit zueinander längs der Linearbewegungsachse antreibbar sind. Dabei können unabhängig von der Lage des Stillstandspunktes auf axial unterschiedlichen Seiten des Stillstandspunktes gelegene Linearbewegungseinheiten in entgegengesetzte Richtungen weisende Absolutgeschwindigkeiten aufweisen, etwa auf den Stillstandspunkt zu oder von diesem weg.

Ebenso kann bei entsprechender Wahl der Übertragung von Antriebsbewegung von den Linearantrieben auf die Linearbewegungseinheiten eine Betriebsart der beiden Linearantriebe vorgesehen sein, bei welcher sich die von jedem einzelnen Linearantrieb auf jede einzelne Linearbewegungseinheit übertragenen Antriebsbewegungen zu einer für alle Linearbewegungseinheiten gleich großen Antriebsbewegungen addieren, so dass dann alle Linearbewegungseinheiten zur Bewegung ohne Relativgeschwindigkeit zueinander Längs der Linearbewegungsachse antreibbar sind. Dies ist der oben bereits genannte Blockbewegungsbetrieb.

Bei gleichzeitiger Aktivierung des ersten und des zweiten Linearantriebs sind also je nach Wahl der Betriebsparameter der Linearantriebe die Linearbewegungseinheiten zur Bewegung ohne Relativgeschwindigkeit zueinander in eine gemeinsame Richtung (Blockbetrieb) oder zur Bewegung mit Relativgeschwindigkeit zueinander in eine gemeinsame Richtung antreibbar (Individualbetrieb zur Erzielung einer Spreizbewegung) oder es ist ein Teil der zwei oder mehr Linearbewegungseinheiten zur Bewegung in eine erste Richtung und ein zweiter Teil der wenigstens zwei Linearbewegungseinheiten zur Bewegung in eine der ersten Richtung entgegengesetzte Richtung längs der Linearbewegungsachse antreibbar. Da, wie oben beschrieben, durch entsprechende Wahl der Betriebsparameter der beiden Linerantriebe eine Linearbewegungseinheit als stillstehende Linearbewegungseinheit auswählbar ist, muss nicht notwendigerweise die Summe aus erstem Teil und zweitem Teil der Linearbewegungseinheiten die Gesamtanzahl an Linearbewegungseinheiten ergeben. Beispielsweise kann sich der erste Teil auf die stillstehende Linearbewegungseinheit zu oder von dieser weg bewegen und kann sich der zweite Teil auf die stillstehende Linearbewegungseinheit zu oder von dieser weg bewegen, wobei der erste und der zweite Teil der Linearbewegungseinheiten bezogen auf die Linearbewegungsachse auf unterschiedlichen Seiten der stillstehenden Linearbewegungseinheit angeordnet sein können.

Gemäß einem zweiten erfinderischen Gedanken wird die eingangs genannte Aufgabe konstruktiv gelöst durch eine Linearbewegungsvorrichtung mit wenigstens zwei Linearbewegungseinheiten, welche längs einer gemeinsamen Linearbewegungsachse beweglich geführt sind, und mit einem ersten Linearantrieb sowie einem vom ersten verschiedenen zweiten Linearantrieb, insbesondere zur Realisierung einer Linearbewegungsvorrichtung gemäß dem ersten erfinderischen Gedanken und deren Weiterbildungen, wobei der erste Linearantrieb durch eine erste Abrollbahn mit einer Mehrzahl von ersten Abrollmitteln in Bewegung übertragender Wirkverbindung steht, wobei jede der wenigstens zwei Linearbewegungseinheiten jeweils mit wenigstens einem ersten Abrollmittel zur gemeinsamen Linearbewegung längs der Linearbewegungsachse verbunden ist, wobei weiter der zweite Linearantrieb durch eine von der ersten verschiedene zweite Abrollbahn mit einer Mehrzahl von zweiten Abrollmitteln in Bewegung übertragender Wirkverbindung steht, wobei jede der wenigstens zwei Linearbewegungseinheiten jeweils mit wenigstens einem der zweiten Abrollmittel zur gemeinsamen Linearbewegung längs der Linearbewegungsachse verbunden ist, wobei jede Abrollbahn von dem mit ihr gekoppelten Linearantrieb in Bewegung versetzbar ist, wobei die ersten Abrollmittel durch die mit ihnen in Wirkverbindung stehende erste Abrollbahn in Bewegung versetzbar sind, wobei die zweiten Abrollmittel durch die mit ihnen in Wirkverbindung stehende zweite Abrollbahn in Bewegung versetzbar sind und wobei für jede Linearbewegungseinheit gilt, dass das erste und das zweite jeweils mit ihr zur gemeinsamen Linearbewegung verbundene Abrollmittel derart in einer vorbestimmten Relativbewegungsbeziehung zueinander stehen oder bringbar sind, dass das erste Abrollmittel durch die zweite Abrollbahn und das zweite Abrollmittel durch die erste Abrollbahn in Bewegung versetzbar sind.

Mit der so aufgebauten Linearbewegungsvorrichtung sind insbesondere die oben erfindungsgemäß beschriebenen Betriebs- und Bewegungsarten der erfindungsgemäßen Linearbewegungsvorrichtung realisierbar.

Die erste Abrollbahn ist dabei eine Übertragungsvorrichtung zur unmittelbaren Übertragung von Antriebsbewegung und Antriebskraft vom ersten Linearantrieb auf die ersten Abrollmittel. Die zweite Abrollbahn ist eine Übertragungsvorrichtung zur unmittelbaren Übertragung von Antriebsbewegung und Antriebskraft vom zweiten Linearantrieb auf die zweiten Abrollmittel. Dadurch, dass das erste und das zweite Abrollmittel einer jeden Linearbewegungseinheit in einer vorbestimmten Relativbewegungsbeziehung zueinander stehen oder bringbar sind - letzteres etwa mittels einer Kupplung - ist es möglich, dass zum einen das erste Abrollmittel mittelbar über das zweite Abrollmittel auch durch die zweite Abrollbahn und zum anderen das zweite Abrollmittel mittelbar über das erste Abrollmittel auch durch die erste Abrollbahn in Bewegung versetzbar sind.

Jedes erste Abrollmittel und jedes zweite Abrollmittel einer Linearbewegungseinheit ist zur gemeinsamen Linearbewegung mit dieser längs der Linearbewegungsachse verbunden.

Dann, wenn beispielsweise wie oben beschrieben nur einer der beiden Linearantriebe aktiviert ist, während der andere deaktiviert ist, wird das mit dem aktivierten Linearantrieb durch die zugeordnete Abrollbahn in unmittelbarer Wirkverbindung stehende Abrollmittel in Bewegung versetzt, wobei dessen Bewegung durch die vorbestimmte Relativbewegungsbeziehung auf das jeweils andere Abrollmittel übertragen wird. Dieses rollt auf der stillstehenden anderen Abrollbahn ab. Da die beiden Abrollmittel mit der sie tragenden Linearbewegungseinheit zur gemeinsamen Linearbewegung längs der Linearbewegungsachse verbunden sind, führt diese Abrollbewegung des anderen Abrollmittels an der stillstehenden Abrollbahn zu einer Bewegung der die beiden Abrollmittel tragenden Linearbewegungseinheit längs der Linearbewegungsachse.

Vorzugsweise ist jede Abrollbahn nur von dem mit ihr gekoppelten Linearantrieb in Bewegung versetzbar. Dadurch kann eine hochgenaue Positionierung der Linearbewegungseinheiten längs der Linearbewegungsachse erreicht werden. Vorzugsweise ist jede Abrollbahn unabhängig von der jeweils anderen immobilisierbar. Dies kann durch eine hierfür vorgesehene Bremse oder - besonders bevorzugt - durch den jeweils unmittelbar mit der Abrollbahn gekoppelten Linerantrieb realisiert sein, am einfachsten, indem letzterer deaktiviert wird oder bleibt.

Wenn oben die Rede davon ist, dass die Abrollmittel mit den Abrollbahnen in Bewegung übertragender Wirkverbindung stehen, so ist damit die Möglichkeit einer Übertragung einer Relativbewegung zwischen dem jeweiligen Abrollmittel und der es tragenden Linearbewegungseinheit oder/und die Möglichkeit zur Übertragung einer Bewegung des Abrollmittels relativ zu einer Linearführung der Linearbewegungseinheiten ohne Relativbewegung zwischen dem Abrollmittel und der es tragenden Linearbewegungseinheit bezeichnet.

Eine Möglichkeit, das erste Abrollmittel mit einer es tragenden Linearbewegungseinheit zur gemeinsamen Linearbewegung längs der Linearbewegungsachse zu verbinden und gleichzeitig die Abrollfähigkeit des ersten Abrollmittels auf der ersten Abrollbahn bereitzustellen, kann dadurch realisiert sein, dass ein mit einer Linearbewegungseinheit zur gemeinsamen Linearbewegung verbundenes erstes Abrollmittel um eine relativ zur Linearbewegungseinheit unbewegliche erste Drehachse relativ zur Linearbewegungseinheit drehbar an dieser aufgenommen ist.

Entsprechendes gilt für das zweite Abrollmittel. Dieses kann um eine relativ zur Linearbewegungseinheit unbewegliche zweite Drehachse relativ zur Linearbewegungseinheit drehbar an dieser aufgenommen sein.

Dabei ist mit "Drehachse" eine Drehachse im mathematischen Sinne, also eine virtuelle Drehachse, bezeichnet, um die das erste oder/und das zweite Abrollmittel relativ zur Linearbewegungseinheit drehen kann. Die Relativdrehbarkeit kann in an sich bekannter Weise dadurch erzielt sein, dass das erste oder/und das zweite Abrollmittel an ihrer jeweiligen Linearbewegungseinheit an einer linearbewegungseinheitsfesten Achse als Bauteil im ingenieurtechnischen Sinne drehbar aufgenommen ist oder dadurch, dass das erste oder/und das zweite Abrollmittel eine Drehwelle aufweisen, welche relativdrehbar an der jeweiligen Linearbewegungseinheit gelagert ist.

Gemäß einer Weiterbildung der vorliegenden Erfindung können die erste und die zweite Drehachse, welche ein- und derselben Linearbewegungseinheit zugeordnet sind, parallel zueinander mit Abstand voneinander angeordnet sein. Dann kann zwischen dem ersten und dem zweiten Abrollmittel ein Getreibe oder/und Gestänge vorgesehen sein, welches das erste und das zweite Abrollmittel in der vorbestimmten Relativbewegungsbeziehung miteinander verbindet. Dann, wenn die Abrollmittel um die oben genannten Drehachsen drehbar an einer Linearbewegungseinheit vorgesehen sind, kann zwischen dem ersten und dem zweiten Abrollmittel wenigstens ein Zahnrad oder Reibrad als das Getriebe zur Bewegungsübertragung in der vorbestimmten Relativbewegungsbeziehung zwischen dem ersten und dem zweiten Abrollmittel einer Linearbewegungseinheit vorgesehen sein. Wenn gewünscht ist, dass das erste und das zweite Abrollmittel stets in gleichem Drehsinne drehen, dann kann zwischen dem ersten und dem zweiten Abrollmittel eine ungerade Anzahl an bewegungsübertragenden Getrieberädern vorgesehen sein, andernfalls eine gerade Anzahl.

Eine sehr kompakte, robuste und einfache Bauweise kann jedoch gemäß einer bevorzugten Weiterbildung der vorliegenden Erfindung dadurch erhalten werden, dass die erste und die zweite Drehachse des ersten und des zweiten Abrollmittels ein- und derselben Linearbewegungseinheit kollinear sind. In diesem Falle folgen das erste und das zweite Abrollmittel in Richtung ihrer gemeinsamen ersten und zweiten Drehachse axial aufeinander. Zur Realisierung der vorbestimmten Relativbewegungsbeziehung kann ganz allgemein vorgesehen sein, dass das erste und das zweite Abrollmittel einer Linearbewegungseinheit mit einem vorbestimmten Drehzahlübertragungsverhältnis als der vorbestimmten Relativbewegungsbeziehung miteinander gekoppelt sind. Dies kann beispielsweise durch das oben genannte Getriebe oder/und Gestänge realisiert sein. Dies kann, wie weiter unten ausführlich erläutert werden wird, jedoch auch durch unmittelbare Kopplung des ersten und des zweiten Abrollmittels einer Linearbewegungseinheit realisiert sein.

Grundsätzlich kann daran gedacht sein, an unterschiedlichen Linearbewegungseinheiten unterschiedliche Drehzahlübertragungsverhältnisse zwischen dem ersten und dem zweiten Abrollmittel der jeweiligen Linearbewegungseinheit zu realisieren. Dann kann beispielsweise stets ein gleiches Bauteil als erstes und ein gleiches, gegebenenfalls anderes, Bauteil als zweites Abrollmittel verwendet werden. Allerdings bedarf es dann bei der Anordnung des bewegungsübertragenden Getriebes oder Gestänges zwischen dem ersten und dem zweiten Abrollmittel der jeweiligen Linearbewegungseinheit einigen Montageaufwands, da unterschiedliche Linearbewegungseinheiten unterschiedliche Getriebe benötigen können.

Daher ist es gemäß der vorliegenden Erfindung bevorzugt, wenn das Drehzahlübertragungsverhältnis an mehreren, vorzugsweise an allen, Linearbewegungseinheiten, die sowohl mit einem ersten als auch mit einem zweiten Abrollmittel zur gemeinsamen Linearbewegung verbunden sind, gleich ist. Das Drehzahlübertragungsverhältnis, etwa ein Drehzahlübertragungsverhältnis von 1:1, kann dann leicht durch unmittelbare Kopplung oder Koppelbarkeit des ersten und des zweiten Abrollmittels miteinander erreicht werden, was insbesondere dann mit geringem Bauaufwand in einfacher Weise realisierbar ist, wenn die erste und die zweite Drehachse des ersten und des zweiten Abrollmittels kollinear sind. Wenn an unterschiedlichen Linearbewegungseinheiten der Linearbewegungsvorrichtung bei vorgegebenem Antrieb der ersten oder/und der zweiten Abrollbahn eine Relativbewegung zwischen den Linearbewegungseinheiten erzeugbar sein soll, kann dies bei für alle Linearbewegungseinheiten gleichem Drehzahlübertragungsverhältnis dadurch realisiert sein, dass die ersten Abrollmittel, welche mit Linearbewegungseinheiten zur gemeinsamen Linearbewegung verbunden sind, die in Richtung der Linearbewegungsachse unmittelbar benachbart sind, einen unterschiedlichen Umfang aufweisen ist oder/und dass die zweiten Abrollmittel, welche mit Linearbewegungseinheiten zur gemeinsamen Linearbewegung verbunden sind, die in Richtung der Linearbewegungsachse unmittelbar benachbart sind, einen unterschiedlichen Umfang aufweisen.

Grundsätzlich können alle ersten Abrollmittel unterschiedlicher Linearbewegungseinheiten gleichen Umfang aufweisen, wenn die zweiten Abrollmittel unterschiedlicher Linearbewegungseinheiten unterschiedliche Umfänge aufweisen oder können die zweiten Abrollmittel unterschiedlicher Linearbewegungseinheiten gleiche Umfänge aufweisen, wenn die ersten Abrollmittel unterschiedlicher Linearbewegungseinheiten unterschiedliche Umfänge aufweisen. Bevorzugt weisen sowohl die ersten Abrollmittel als auch die zweiten Abrollmittel unterschiedlicher Linearbewegungseinheiten unterschiedliche Umfänge auf, um einen möglichst großen Bereich von Relativgeschwindigkeiten zwischen den Linearbewegungseinheiten realisieren zu können.

Beispielsweise kann das erste und das zweite Abrollmittel einer jeden Linearbewegungseinheit als Stufenzahnrad oder Stufenreibrad ausgebildet sein, d. h. aus zwei bezüglich ihrer Drehachse unmittelbar aufeinander folgenden Rädern mit unterschiedlichem Umfang bzw. unterschiedlichem Durchmesser.

Es sei an dieser Stelle klargestellt, dass bevorzugt jede Linearbewegungseinheit mit einem anderen ersten Abrollmittel und mit einem anderen zweiten Abrollmittel als die übrigen der wenigstens zwei Linearbewegungseinheiten zur gemeinsamen Bewegung längs der Linearbewegungsachse verbunden sind.

Um eine positive oder negative Spreizbewegung zwischen den wenigstens zwei Linearbewegungseinheiten realisieren zu können, bei welcher diese sich voneinander entfernen oder sich aneinander annähern, d. h. den zwischen zwei längs der Linearbewegungsachse unmittelbar benachbarten Linearbewegungseinheiten vorhandenen Abstand vergrößern bzw. verringern, kann vorgesehen sein, dass der Umfang der ersten Abrollmittel in einer Richtung längs der Linearbewegungsachse von einer Linearbewegungseinheit zur nächsten unmittelbar benachbarten Linearbewegungseinheit zunimmt.

Alternativ oder zusätzlich kann vorgesehen sein, dass der Umfang von zweiten Abrollmitteln in einer Richtung, vorzugsweise in derselben Richtung wie zuvor bei den ersten Abrollmitteln, längs der Linearbewegungsachse von einer Linearbewegungseinheit zur nächsten unmittelbar beanchbarten linearen Bewegungseinheit abnimmt. Durch Kombination dieser beiden Maßnahmen kann die zwischen den einzelnen Linearbewegungseinheiten erzielbare Relativgeschwindigkeit erhöht werden, verglichen mit der Realisierung nur einer der beiden zuvor genannten Maßnahmen.

Gemäß einer Weiterbildung der vorliegenden Erfindung sind die erste Abrollbahn und die zweite Abrollbahn jeweils ein Riemen, vorzugsweise ein endlos umlaufender Riemen. Dann können die ersten und die zweiten Abrollmittel, wie oben bereits angedeutet, jeweils mit einem der Riemen in unmittelbarem Abrolleingriff stehende Abrollräder sein. Zur möglichst präzisen Positionierung der Linearbewegungseinheiten ist es zur Vermeidung von Schlupf zwischen Abrollbahn und zugeordnetem Abrollmittel bevorzugt, wenn der zuvor genannte Riemen ein Zahnriemen ist und wenn das diesem Riemen unmittelbar zugeordnete Abrollmittel ein mit diesem Riemen in Kämm eingriff stehendes Zahnrad ist. Dies gilt sowohl für die erste wie auch für die zweite Abrollbahn und ebenso für die ersten wie auch für die zweiten Abrollmittel.

Die erste oder/und die zweite Abrollbahn kann auch durch eine Kette, etwa eine Rollenkette, gebildet sein.

Durch entsprechende Wahl der Umfänge bzw. Durchmesser der Abrollräder an den einzelnen Linearbewegungseinheiten kann erreicht werden, dass im Individualbetrieb der Geschwindigkeitsunterschied zwischen zwei längs der Linearbewegungsachse unmittelbar benachbarten Linearbewegungseinheiten für alle Linearbewegungseinheiten gleich groß ist. Dadurch kann erreicht werden, dass im Individualbetrieb die Linearbewegungseinheiten zwar aufeinander zu und voneinander weg bewegt werden können, alle zwischen zwei in Richtung der Linearbewegungsachse unmittelbar benachbarten Linearbewegungseinheiten bestehenden Abstände für alle Linearbewegungseinheiten stets gleich groß sind, wenn sie dies zu Beginn der Bewegung waren.

Wenn also die erfindungsgemäße Linearbewegungsvorrichtung vor Betriebsbeginn mit äquidistant längs der Linearbewegungsachse angeordneten Linearbewegungseinheiten bereitgestellt wird und die Umfangsänderungen der ersten und der zweiten Abrollräder der jeweiligen Linearbewegungseinheiten entsprechend gewählt sind, dann bleiben die Linearbewegungseinheiten stets äquidistant längs, der Linearbewegungsachse, auch wenn sich ihr Abstand untereinander verringert oder vergrößert.

Zur Erhöhung der Anzahl von durch die Linearbewegungsvorrichtung bewegbaren Linearbewegungseinheiten kann vorgesehen sein, dass die Linearbewegungsvorrichtung zusätzlich eine erste Direkt-Linearbewegungseinheit umfasst, welche ohne Zwischenanordnung von Abrollmitteln unmittelbar nur mit der ersten Abrollbahn zur gemeinsamen Bewegung mit dieser gekoppelt ist oder/und dass sie zusätzlich eine zweite Direkt-Linearbewegungseinheit umfasst, welche ohne Zwischenanordnung von Abrollmitteln unmittelbar nur mit der zweiten Abrollbahn zur gemeinsamen Bewegung mit dieser gekoppelt ist

In diesem Fall wird die Linearbewegungseinheit stets mit der gleichen Geschwindigkeit bewegt, mit der die mit ihr gekoppelte Abrollbahn von dem zugeordneten Linearantrieb bewegt wird. Aus diesem Grunde sind die Direkt-Linearbewegungseinheiten vorzugsweise in Richtung der Linearbewegungsachse als endseitige Linearbewegungseinheit angeordnet. Dies bedeutet, dass die Direkt-Linearbewegungseinheit bevorzugt nur auf einer axialen Seite eine der zuvor genannten wenigstens zwei Linearbewegungseinheiten als Nachbarn aufweist, während sich auf der entgegengesetzten axialen Seite keine Linearbewegungseinheit mehr befindet. Vorzugsweise befinden sich dann, wenn sowohl eine erste als auch eine zweite Direkt-Linearbewegungseinheit vorgesehen ist, die oben genannten wenigstens zwei Linearbewegungseinheiten längs der Linearbewegungsachse zwischen der ersten und der zweiten Direkt-Linearbewegungseinheit.

Es sei an dieser Stelle klargestellt, dass dann, wenn beide Enden einer Abrollbahn mit der ihr zugeordneten Direkt-Linearbewegungseinheit derart fest gekoppelt sind, dass die Abrollbahn an der Befestigungsstelle mit der Direkt-Linearbewegungseinheit ein für den Linearantrieb zur Übertragung von Antriebsbewegung unüberwindliches Hindernis aufweist oder gar die Längsenden der Abrollbahn mit einem zu ihrer Erstreckungsrichtung orthogonalen Versatz mit der Direkt-Linearbewegungseinheit gekoppelt sind, die Abrollbahn dennoch als endlos umlaufende Abrollbahn im Sinne der vorliegenden Erfindung angesehen werden soll.

Wie oben bereits durch das konkrete Beispiel von Riemen und Reibrädern bzw. von Zahnriemen und mit diesen im Kämmeingriff befindlichen Zahnrädern dargestellt wurde, kann die eingangs genannte Bewegung übertragende Wirkverbindung zwischen den ersten Abrollmitteln und der ersten Abrollbahn oder/und zwischen den zweiten Abrollmitteln und der zweiten Abrollbahn ein Abrolleingriff sein, insbesondere ein reibschlüssiger Abrolleingriff oder bevorzugt ein formschlüssiger, höchst bevorzugt kämmender Abrolleingriff sein.

Grundsätzlich ist die erfindungsgemäße Linearbewegungsvorrichtung bereits mit genau zwei Linearbewegungseinheiten (etwaige Direkt-Linearbewegungseinheiten nicht mitgerechnet) realisierbar, wenngleich ihr entscheidender Vorteil erst dann richtig zum Tragen kommt, wenn mehr Linearbewegungseinheiten mit je wenigstens einem ersten und wenigstens einem zweiten Abrollmittel als Linearantriebe vorgesehen sind. Deshalb umfasst die erfindungsgemäße Linearbewegungsvorrichtung vorzugsweise mehr als zwei Linearbewegungseinheiten, oder allgemein: die Anzahl an mit zwei Linearantrieben zur Individualbewegung und zur Blockbewegung antreibbaren Linearbewegungseinheiten ist größer bzw. deutlich größer als die Anzahl der zu ihrem Bewegungsantrieb längs der Linearbewegungsachse vorgesehenen Linearantriebe.

Um die Linearbewegungseinheiten möglichst nah in axialer Richtung aneinander annähern zu können, kann vorgesehen sein, dass sie mehr als eine längs der Linearbewegungsachse verlaufende Linearführungsschiene aufweist, wobei längs der Linearbewegungsachse unmittelbar aufeinander folgende Linearbewegungseinheiten an unterschiedlichen Linearführungsschienen geführt sind.

Sofern vorstehend im Einzelfall nichts Abweichendes ausgesagt ist, ist "axial" in der vorliegenden Anmeldung stets bezogen auf die Linearbewegungsachse verwendet. "Bewegung" der Linearbewegungseinheiten in der vorliegenden Anmeldung ist eine Bewegung relativ zu einem mit einer Bewegungsführung der Linearbewegungseinheiten ruhenden Koordinatenachsen.

Die vorliegende Erfindung wird nachfolgend anhand der beiliegenden Zeichnungen näher erläutert werden. Es stellt dar:
- Fig. 1: eine Ausführungsform einer erfindungsgemäßen Linearbewegungsvorrichtung in einer ersten Extremstellung,
- Fig. 2: die Linearbewegungsvorrichtung von Fig. 1 in einer zweiten Betriebsstellung und
- Fig. 3: die Linearbewegungsvorrichtung der Fig. 1 und 2 in ihrer maximal gespreizten Betriebsstellung.

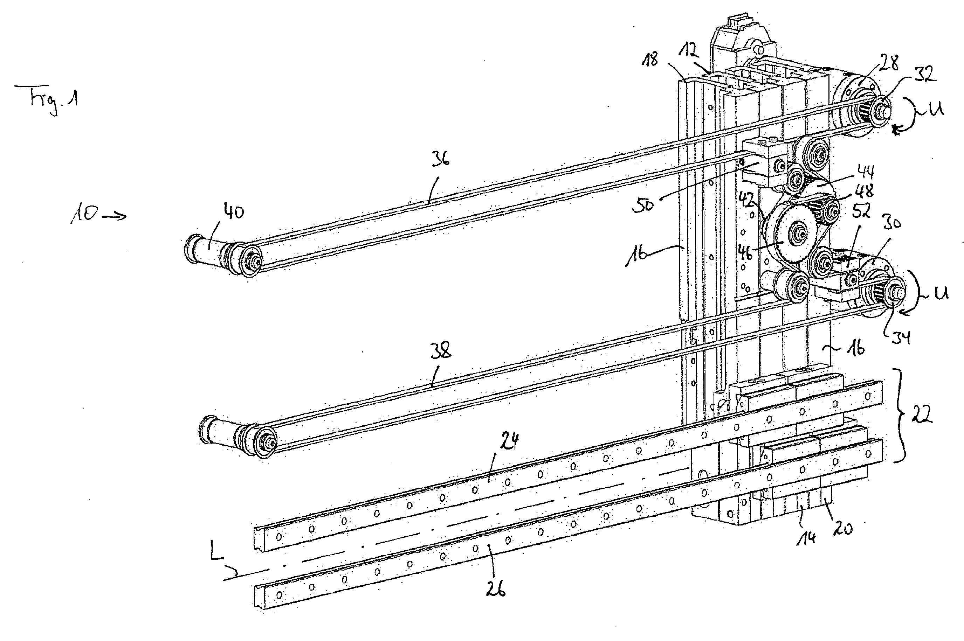

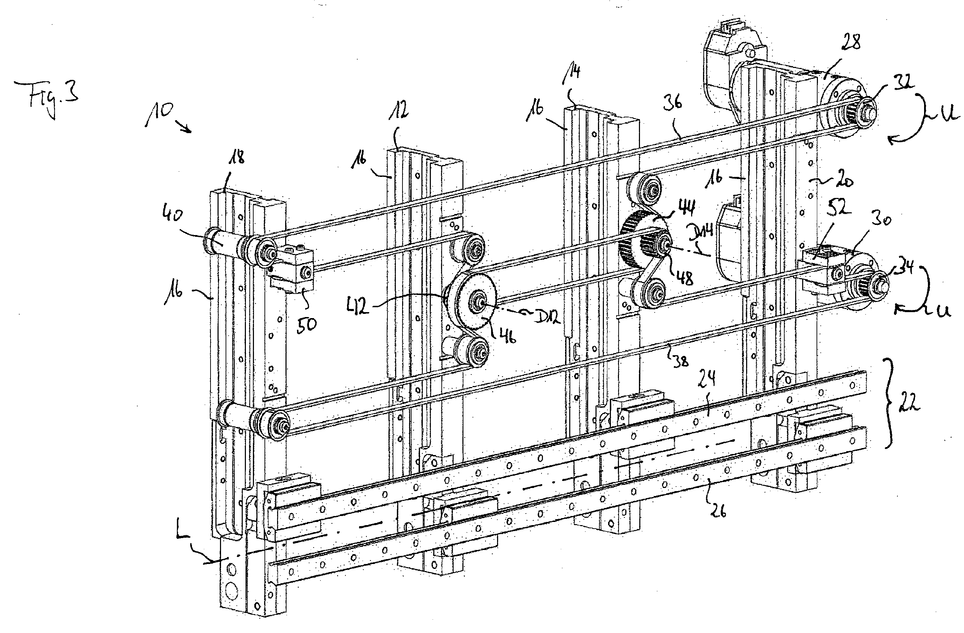

Nachfolgend wird zur Beschreibung einer erfindungsgemäßen Ausführungsform einer Linearbewegungsvorrichtung der vorliegenden Anmeldung auf die Fig. 1, 2 und 3 gemeinsam Bezug genommen. Aufgrund ihrer Bildraumaufteilung sollte jedoch Fig. 3 die übersichtlichste Darstellung der nachfolgend erläuterten erfindungsgemäßen Ausführungsform bieten.

In den Fig. 1 bis 3 ist eine erfindungsgemäße Linearbewegungsvorrichtung allgemein mit 10 bezeichnet. Die Linearbewegungsvorrichtung 10 weist in dem dargestellten Beispiel genau zwei Linearbewegungseinheiten 12 und 14 auf, wobei die Anzahl von zwei nur der besseren Übersichtlichkeit halber gewählt ist. Tatsächlich wird eine Linearbewegungsvorrichtung der vorliegenden Anmeldung mehr als zwei Linearbewegungseinheiten 12 und 14 aufweisen.

Die Linearbewegungseinheiten 12 und 14 umfassen einen im Wesentlichen einheitlich ausgebildeten Träger 16, an welchem beispielsweise ein Pipettierkanal einer Pipettiervorrichtung aufgenommen sein kann. Dieser ist in den Fig. 1 bis 3 nicht dargestellt und würde an den jeweiligen Trägern 16 im Wesentlichen in Trägerlängsrichtung, also in den Fig. 1 bis 3 von oben nach unten verlaufen.

Weiter umfasst die Linearbewegungsvorrichtung 10 im dargestellten Beispiel eine erste Direkt-Linearbewegungseinheit 18 und eine zweite Direkt-Linearbewegungseinheit 20, welche die Linearbewegungseinheiten 12 und 14 zwischen sich aufnehmen. Auch die Direkt-Linearbewegungseinheiten 18 und 20 weisen jeweils einen Träger 16 auf und dienen im dargestellten Beispiel zur Aufnahme jeweils eines Pipettierkanals.

Die Linearbewegungseinheiten 12 und 14 sowie die Direkt-Linearbewegungseinheiten 18 und 20 sind an einer Linearführung 22 zur Bewegung längs der Linearbewegungsachse L geführt. Die Linearführung 22 kann zwei parallele Führungsschienen 24 und 26 aufweisen, an welchen jeweils die Hälfte der vorhandenen Linearbewegungseinheiten 12 und 14 sowie der Direkt-Linearbewegungseinheiten 18 und 20 zur Bewegung längs der Linearbewegungsachse L geführt sein kann. Um eine größtmögliche axiale (bezogen auf die Linearbewegungsachse) Annäherung der Linearbewegungseinheiten 12 und 14 zueinander sowie zu den Direkt-Linearbewegungseinheiten 18 und 20 zu ermöglichen, sind bevorzugt axial unmittelbar benachbarte Einheiten der Linearbewegungseinheiten 12 und 14 sowie der Direkt-Linearbewegungseinheiten 18 und 20 an jeweils unterschiedlichen Führungsschienen 24 und 26 geführt. Die Linearführung 22 bildet überdies einen Bezugspunkt für ein führungs- bzw. gestellfestes Koordinatensystem, anhand dessen sich Position und Bewegung der Linearbewegungseinheiten 12 und 14 sowie der Direkt-Linearbewegungseinheiten 18 und 20 feststellen lassen.

Führungs- bzw. gestellfest umfasst die Linearbewegungsvorrichtung 10, vorzugsweise einen ersten Linarantrieb 28 und einen zweiten Linearantrieb 30. Diese sind bevorzugt Elektromotoren, deren Abtriebswelle über ein Zahnrad 32 bzw. 34 mit einem Zahnriemen 36 bzw. einem Zahnriemen 38 kämmt.

Der Zahnriemen 36 in der dargestellten Ausführungsform ist eine erste Abrollbahn im Sinne der vorliegenden Anmeldung. Er ist als endlos umlaufender Zahnriemen 36 ausgestaltet, wobei er an seinem dem Linearantrieb 28 axial weitest entfernt gelegenen Ort von einer Umlenkrolle 40 umgelenkt ist. Die führungs- bzw. gestellfeste Umlenkrolle 40 und der ebenfalls führungs- bzw. gestellfeste Linearantrieb 28 definieren zwischen sich den axialen Verfahrweg der Linearbewegungseinheiten 12 und 14 sowie der Direkt-Linearbewegungseinheiten 18 und 20.

Der Zahnriemen 36 kämmt an der Linearbewegungseinheit 12 mit einem kleineren Zahnrad 42 und kämmt an der axial unmittelbar benachbart angeordneten Linearbewegungseinheit 14 mit einem größeren Zahnrad 44. Die Größenverhältnisse sind hier nur beispielhaft gewählt. Ebenso kann das Zahnrad 42 größer und das Zahnrad 44 kleiner sein. Mit "größer" bzw. "kleiner" ist hier "durchmessergrößer" und "umfangsgrößer" bzw. "durchmesserkleiner" und "umfangskleiner" gemeint.

Die Zahnräder 42 und 44 sind erste Abrollmittel im Sinne der vorliegenden Erfindung. Sie sind jeweils um eine Relativdrehachse D12 bzw. D14 relativdrehbar aber axial (bezogen auf die Linearbewegungsachse L) nur gemeinsam beweglich mit der sie jeweils tragenden Linearbewegungseinheit 12 bzw. 14 verbunden. Jedes Zahnrad 42 und 44 kann sich also an der es jeweils tragenden Linearbewegungseinheit 12 bzw. 14 um die Drehachse D12 bzw. D14 drehen, kann jedoch nur gemeinsam mit der es jeweils tragenden Linearbewegungseinheit 12 bzw. 14 längs der Linearbewegungsachse L bewegt werden.

Der Zahnriemen 38, welcher eine zweite Abrollbahn im Sinne der vorliegenden Anmeldung darstellt, kämmt an der Linearbewegungseinheit 12 mit einem beispielhaft durchmessergrößeren Zahnrad 46 und kämmt an der axial unmittelbar benachbarten Linearbewegungseinheit 14 mit einem beispielhaft durchmesserkleineren Zahnrad 48. Die Zahnräder 46 und 48 bilden zweite Abrollmittel im Sinne der vorliegenden Anmeldung.

Das Zahnrad 46 ist mit der es tragenden Linearbewegungseinheit 12 zur gemeinsamen axialen Bewegung längs der Linearbewegungsache L befestigt, kann jedoch relativ zur Linearbewegungseinheit 12 drehen. Bevorzugt ist die Drehachse des Zahnrads 46 koaxial mit der Drehachse des Zahnrads 42, so dass im dargestellten Beispiel auch das Zahnrad 46 um die relativ zur Linearbewegungseinheit 12 festgelegte Drehachse D12 drehen kann.

Entsprechendes gilt für das Zahnrad 48, welches bevorzugt um die an der Linearbewegungseinheit 14 feste Drehache D14 drehen kann, so dass die Zahnräder 44 und 48 ebenfalls eine koaxiale Drehachse aufweisen.

Die mit den Zahnriemen 36 und 38 kämmenden Zahnräder einer Linearbewegungseinheit 12 oder 14 stehen jeweils in einer vorbestimmten festgelegten Relativbewegungsbeziehung miteinander. Im vorliegenden Beispiel sind die Zahnräder 42 und 46 an der Linearbewegungseinheit 12 zur gemeinsamen Drehung mit gleicher Drehzahl um die Drehachse D12 miteinander gekoppelt. Ebenso sind die Zahnräder 44 und 48 an der Linerarbewegungseinheit 14 zur gemeinsamen Drehung mit gleicher Drehzahl um die Drehachse D14 miteinander gekoppelt.

Bei dem vorliegend gewählten vorbestimmten Relativbewegungsverhältnis können das erste und das zweite Abrollmittel einer gemeinsamen Linearbewegungseinheit auch einstückig ausgebildet sein. Beispielsweise könnten die Zahnräder 42 und 46 einerseits und Zahnräder 44 und 48 als jeweils ein einstückiges Stufenzahnrad ausgebildet sein.

Die Zahnriemen 36 und 38 sind nicht nur durch ihre jeweils zugeordneten Linearmotoren 28 und 30 zur Bewegung antreibbar, sondern sind vorzugsweise durch die jeweils zugeordneten Linearantriebe 28 und 30 auch immobilisierbar, also stillsetzbar.

Wenn beispielsweise in Fig. 3 der Zahnriemen 36 durch seinen unmittelbar mit ihm in Antriebswirkbeziehung stehenden Linearantrieb 28 immobilisiert ist und das Antriebszahnrad 34 des Linearantriebs 30 im Gegenuhrzeigersinn entgegengesetzt zum Uhrzeigersinn U angetrieben wird, dann werden durch den im Gegenuhrzeigersinn umlaufenden Zahnriemen 38 unmittelbar die Zahnräder 48 und 46 jeweils zur Drehung im Gegenuhrzeigersinn angetrieben.

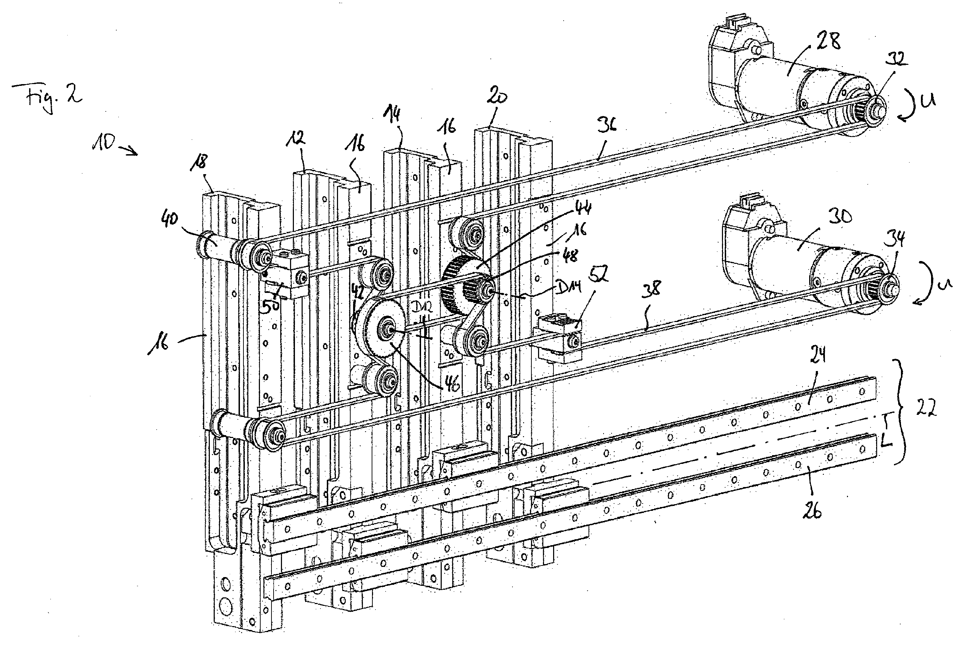

Da das Zahnrad 44 im dargestellten Beispiel zur drehzahlgleichen gemeinsamen Drehung mit dem Zahnrad 48 gekoppelt ist und ebenso das Zahnrad 42 mit dem Zahnrad 46 gekoppelt ist, werden diese Zahnräder 44 und 42 an dem immobilisierten Zahnriemen 36 abrollen. Durch diese Abrollbewegung werden sich die Linearbewegungseinheiten 12 und 14 in Fig. 3 nach links bewegen, in Richtung einer Betriebsstellung wie sie in Fig. 2 gezeigt ist.

Aufgrund der gewählten Durchmesser der beteiligten Zahnräder 42, 44, 46 und 48 wird die Geschwindigkeit der Linearbewegungseinheit 14 nach links größer sein als jene der Linearbewegungseinheit 12.

Die Direkt-Linearbewegungseinheit 18, welche unmittelbar durch Klemmung 50 starr mit dem immobilisierten Zahnriemen 36 gekoppelt ist, wird mit dem Zahnriemen 36 relativ zur Linearführung 22 stillstehen. Die durch die Klemmung 52 mit dem Zahnriemen 38 zur gemeinsamen unmittelbaren Bewegung gekoppelte Direkt-Linearbewegungseinheit 20 wird dagegen mit der gleichen Geschwindigkeit wie der Zahnriemen 38 nach links verfahren.

Die Durchmesser der Zahnradpaarungen der Zahnräder 42 und 46 einerseits und 44 und 48 andererseits sind so gewählt, dass die Geschwindigkeiten der Direkt-Linearbewegungseinheiten und der Linearbewegungseinheiten im hier diskutierten Bewegungsbeispiel von links nach rechts in Fig. 3 jeweils um den gleichen Geschwindigkeitsunterschied zunehmen. Daher bleiben die in Fig. 3 äquidistant längs der Linearbewegungsachse L angeordneten Linearbewegungseinheiten 12 und 14 und Direkt-Linearbewegungseinheiten 18 und 20 auch bei ihrer hier diskutierten Verfahrbewegung nach links in die Stellung von Fig. 2 stets äquidistant.

Wenn dagegen der Zahnriemen 38 durch den unmittelbar mit ihm in Antriebswirkverbindung gekoppelten Linearantrieb 30 immobilisiert ist und der Linearantrieb 28 im Gegenuhrzeigersinn zur Bewegung angetrieben wird, werden durch den bewegten Zahnriemen 36 mit gleicher Geschwindigkeit die Direkt-Linearbewegungseinheit 18 in Fig. 3 nach rechts zur Bewegung angetrieben und werden die Zahnräder 42 und 44 unmittelbar durch den Zahriemen 36 zur Drehung im Gegenuhrzeigersinn angetrieben. Aufgrund der oben geschilderten Relativbewegungsbeziehung zwischen-den Zahnrädern 42 und 46 einerseits und 44 und 48 andererseits werden mittelbar durch den Zahnriemen 36 auch das Zahnrad 46 und das Zahnrad 48 in Drehung im Gegenuhrzeigersinn versetzt. Die Zahnräder 46 bzw. 48 rollen deshalb am immobilisierten Zahnriemen 38 ab, so dass es zu einer Bewegung der Direkt-Linearbewegungseinheit 28 und der Linearbewegungseinheiten 12 und 14 nach rechts kommt, bis schließlich die in Fig. 1 dargestellte Endstellung erreicht wird.

Die Direkt-Linearbewegungseinheit 20 ist mit dem Zahnriemen 38 immobilisiert und steht bei dem hier gegebenen Bewegungsbeispiel still. Da die Zahnräder 42 und 48 im dargestellten Beispiel im Wesentlichen identisch sind und die Zahnräder 46 und 44 im dargestellten Beispiel im Wesentlichen identisch sind, kommt es bei der nun dargestellten Bewegung nach rechts bei unterstelltem gleichen Bewegungsantrieb durch den Linearantrieb 28 wie zuvor zur exakt gleichen, jedoch umgekehrten Geschwindigkeitsverteilung wie zuvor: Die am weitesten links gelegene Direkt-Llnearbewegungseinheit 18 weist die gleiche Geschwindigkeit wie der Zahnriemen 36 und damit die größte axiale Geschwindigkeit auf, die Linearbewegungseinheit 12 die zweitgrößte und die Linearbewegungseinheit 14 die drittgrößte, wobei die Geschwindigkeitsunterschiede zwischen zwei axial unmittelbar benachbarten Einheiten aus den Direkt-Linearbewegungseinheiten und Linearbewegungseinheiten stets gleich groß ist, so dass die Äquidistanz zwischen den Einheiten während des Verfahrens vorteilhafterweise gewahrt bleibt.

Wenn dagegen etwa ausgehend von der Betriebsstellung der Fig. 2 der Linearantrieb 28 im Gegenuhrzeigersinn angetrieben wird und der Linearantrieb 30 im Uhrzeigersinn angetrieben wird, können bei Wahl der entsprechenden sonstigen Betriebsparameter der Linearantriebe 28 und 30 die Einheiten 18, 12, 14 und 20 als Block ohne Relativgeschwindigkeit untereinander längs der Linearbewegungsachse L nach rechts bewegt werden.

Aufgrund der Baugleichheit der Zahnräder 42 und 48 einerseits sowie 44 und 46 andererseits sowie der direkten Kopplung der Direkt-Linearbewegungseinheiten 18 und 20 mit den Zahnriemen 36 bzw. 38 müssen im dargestellten Beispiel die Zahnriemen 36 und 38 mit dem gleichen Geschwindigkeitsbetrag angetrieben werden, um die gewünschte Blockbewegung zu erreichen. Die Zahnräder 42, 44, 46, 48 drehen dann relativ zu den sie tragenden Linearbewegungseinheiten 12 und 14 nicht, sondern werden nur translatorisch längs der Linearbewegungsachse L bewegt.

Ebenso kann ausgehend von Fig. 1 durch gleichzeitigen Antrieb des Linearantriebs 28 im Uhrzeigersinn und des Linearantriebs 30 im Gegenuhrzeigersinn mit betragsgleichen Geschwindigkeiten die Gesamtheit der Einheiten 18, 12, 14 und 20 als Block ohne Relativgeschwindigkeit untereinander nach links bewegt werden.

Werden an der dargestellten Ausführungsform beide Linearbewegungsantriebe gleichzeitig gegensinnig betrieben, jedoch nicht mit gleichem Geschwindigkeitsbetrag, so können geringere Relativgeschwindigkeiten zwischen den Einheiten 18, 12, 14 und 20 eingestellt werden als dies der Fall wäre, wenn einer der Zahnriemen 36 und 38 wie zuvor beschrieben stillstünde.

Ebenso kann dann, wenn beide Linearantriebe 28 und 30 im dargestellten Beispiel gleichzeitig gleichsinnig angetrieben werden, eine höhere Relativgeschwindigkeit zwischen den Einheiten 18, 12, 14 und 20 erreicht werden, als dies der Fall wäre, wenn einer der Zahnriemen 36 und 38 wie zu vor beschrieben stillstünde.

Für die anmeldungsgegenständliche Linearbewegungsvorrichtung ist es vorteilhaft, wenn die ersten Abrollmittel und die zweiten Abrollmittel aus zwei identischen Sätzen unterschiedlicher Abrollräder, insbesondere Zahnräder, besteht. Dies kann die Äquidistanz von Linearbewegungseinheiten und Direkt-Linearbewegungseinheiten während der Bewegung in einfacher Art und Weise sicherstellen. Dann kann auch der gleiche Linearantrieb an beiden Abrollbahnen (bevorzugt: Zahnriemen) verwendet werden.

Sofern jedoch unterschiedliche Sätze von Abrollrädern als erste und zweite Abrollmittel verwendet werden, kann der oben beschriebene Betrieb durch entsprechend unterschiedliche Wahl von Betriebsparametern des ersten und des zweiten Linearantriebs zur Realisierung der oben beschriebenen Bewegungsarten erreicht werden.

Der Übergang der Betriebsstellung von Fig. 1 zu jener von Fig. 2 entspricht einer Kombinierten Block- und Spreizbewegung, da alle Einheiten 18, 12, 14 und 20 gemeinsam nach links bewegt wurden und überdies der Abstand zwischen diesem vergrößert wurde. Genauer wurde hier eine Blockbewegung mit einer positiven Spreizbewegung überlagert.

Der Übergang der Betriebsstellung von Fig. 2 zu jener der Fig. 3 ist eine reine Spreizbewegung, da die Direkt-Linearbewegungseinheit 18 unbewegt an Ort und Stelle verblieb. Genauer ist die Bewegung zum Übergang der Betriebsstellung von Fig. 2 zu jener der Fig. 3 eine positive Spreizbewegung.

Um von der Betriebsstellung von Fig. 3 zu jener der Fig. 1 überzugehen, bedarf es dagegen einer negativen Spreizbewegung, also einer Annäherungsbewegung der Einheiten 18, 12, 14 und 20 zueinander. Hier bleibt die in der dargestellten Ausführungsform ganz rechte Direkt-Linearbewegungseinheit 20 unbewegt.

## Patentansprüche

1. Linearbewegungsvorrichtung mit wenigstens zwei Linearbewegungseinheiten (12, 14), welche längs einer gemeinsamen Linearbewegungsachse (L) beweglich geführt sind, wobei die Linearbewegungsvorrichtung (10) einen ersten Linearantrieb (28) und einen zweiten Linearantrieb (30) aufweist, wobei bei gleichzeitiger Aktivierung des ersten und des zweiten Linearantriebs (28, 30) alle Linearbewegungseinheiten (12, 14) wenigstens zur gleichgerichteten gemeinsamen Bewegung längs der Linearbewegungsachse (L) ohne Relativgeschwindigkeit zueinander antreibbar sind,
**dadurch gekennzeichnet, dass** die Linearbewegungsvorrichtung (10) den ersten Linearantrieb (28) und den zweiten Linearantrieb (30) derart aufweist, dass jede Linearbewegungseinheit (12, 14) sowohl nur durch den ersten Linearantrieb (28) als auch nur durch den zweiten Linearantrieb (30) als auch durch beide Linearantriebe (28, 30) gemeinsam zur Bewegung längs der Linearbewegungsachse (L) antreibbar ist, wobei der erste und der zweite Linearantrieb (28, 30) derart Antriebskraft übertragend mit den Linearbewegungseinheiten (12, 14) gekoppelt sind, dass bei Aktivierung nur des ersten Linearantriebs (28) oder nur des zweiten Linearantriebs (30) die Linearbewegungseinheiten (12, 14) zur Bewegung in eine gemeinsame Richtung längs der Linearbewegungsachse (L) mit Relativgeschwindigkeit zueinander antreibbar sind.

2. Linearbewegungsvorrichtung nach Anspruch 1,
**dadurch gekennzeichnet, dass** zusätzlich abhängig von dem jeweiligen Betriebszustand der beiden Linearantriebe (28, 30) wenigstens alle Linearbewegungseinheiten (12, 14) bis auf eine, vorzugsweise alle Linearbewegungseinheiten (12, 14), zur Bewegung mit Relativgeschwindigkeit zueinander längs der Linearbewegungsachse (L) antreibbar sind oder alle Linearbewegungseinheiten (12, 14) zur Bewegung ohne Relativgeschwindigkeit zueinander längs der Linearbewegungsachse (L) antreibbar sind.

3. Linearbewegungsvorrichtung nach Anspruch 2,
**dadurch gekennzeichnet, dass** bei gleichzeitiger Aktivierung des ersten und des zweiten Linearantriebs (28, 30) alle Linearbewegungseinheiten (12, 14) abhängig von dem jeweiligen Betriebszustand der Linearantriebe (28, 30) zur Bewegung ohne Relativgeschwindigkeit zueinander in eine gemeinsame Richtung oder zur Bewegung mit Relativgeschwindigkeit zueinander in eine gemeinsame Richtung antreibbar sind oder ein erster Teil der wenigstens zwei Linearbewegungseinheiten (12, 14) zur Bewegung in eine erste Richtung und ein zweiter Teil der wenigstens zwei Linearbewegungseinheiten (12, 14) zur Bewegung in eine der ersten Richtung entgegengesetzte zweite Richtung längs der Linearbewegungsachse (L) antreibbar ist.

4. Linearbewegungsvorrichtung nach einem der Ansprüche 1 bis 3,
**dadurch gekennzeichnet, dass** der erste Linearantrieb (28) durch eine erste Abrollbahn (36) mit einer Mehrzahl von ersten Abrollmitteln (42, 44) in Bewegung übertragender Wirkverbindung steht, wobei jede der wenigstens zwei Linearbewegungseinheiten (12, 14) jeweils mit wenigstens einem ersten Abrollmittel (42, 44) zur gemeinsamen Linearbewegung längs der Linearbewegungsachse (L) verbunden ist, wobei weiter der vom ersten verschiedene zweite Linearantrieb (30) durch eine von der ersten verschiedene zweite Abrollbahn (38) mit einer Mehrzahl von zweiten Abrollmitteln (46, 48) in Bewegung übertragender Wirkverbindung steht, wobei jede der wenigstens zwei Linearbewegungseinheiten (12, 14) jeweils mit wenigstens einem der zweiten Abrollmittel (46, 48) zur gemeinsamen Linearbewegung längs der Linearbewegungsachse (L) verbunden ist, wobei jede Abrollbahn (36, 38) von dem mit ihr gekoppelten Linearantrieb (28, 30) in Bewegung versetzbar ist, wobei die ersten Abrollmittel (42, 44) durch die mit ihnen in Wirkverbindung stehende erste Abrollbahn (36) in Bewegung versetzbar sind, wobei die zweiten Abrollmittel (42, 48) durch die mit ihnen in Wirkverbindung stehende zweite Abrollbahn (38) in Bewegung versetzbar sind und wobei für jede Linearbewegungseinheit (12, 14) gilt, dass das erste und das zweite jeweils mit ihr zur gemeinsamen Linearbewegung verbundene Abrollmittel (42, 44, 46, 48) derart in einer vorbestimmten Relativbewegungsbeziehung zueinander stehen oder bringbar sind, dass das erste Abrollmittel (42, 44) durch die zweite Abrollbahn (38) und das zweite Abrollmittel (46, 48) durch die erste Abrollbahn (38) in Bewegung versetzbar sind.

5. Linearbewegungsvorrichtung nach Anspruch 4,
**dadurch gekennzeichnet, dass** ein mit einer Linearbewegungseinheit (12, 14) zur gemeinsamen Linearbewegung verbundenes erstes Abrollmittel (42, 44) um eine relativ zur Linearbewegungseinheit (12, 14) unbewegliche erste Drehachse (D12, D14) relativ zur Linearbewegungseinheit (12, 14) drehbar an dieser aufgenommen ist.

6. Linearbewegungsvorrichtung nach Anspruch 4 oder 5,
**dadurch gekennzeichnet, dass** ein mit einer Linearbewegungseinheit (12, 14) zur gemeinsamen Linearbewegung verbundenes zweites Abrollmittel (46, 48) um eine relativ zur Linearbewegungseinheit (12, 14) unbewegliche zweite Drehachse (D12, D14) relativ zur Linearbewegungseinheit (12, 14) drehbar an dieser aufgenommen ist.

7. Linearbewegungsvorrichtung nach Anspruch 5 und 6,
**dadurch gekennzeichnet, dass** die erste und die zweite Drehachse (D12, D14) kollinear sind.

8. Linearbewegungsvorrichtung nach den Ansprüchen 5 und 6 oder nach Anspruch 7,
**dadurch gekennzeichnet, dass** das erste und das zweite Abrollmittel (42, 44, 46, 48) einer Linearbewegungseinheit (12, 14) mit einem vorbestimmten Drehzahlübertragungsverhältnis als der vorbestimmten Relativbewegungsbeziehung miteinander gekoppelt sind.

9. Linearbewegungsvorrichtung nach Anspruch 8,
**dadurch gekennzeichnet, dass** das Drehzahlübertragungsverhältnis an mehreren, vorzugsweise an allen, Linearbewegungseinheiten (12, 14), die sowohl mit einem ersten als auch mit einem zweiten Abrollmittel (42, 44, 46, 48) zur gemeinsamen Linearbewegung verbunden sind, gleich ist.

10. Linearbewegungsvorrichtung nach Anspruch 8 oder 9,
**dadurch gekennzeichnet, dass** das Drehzahlübertragungsverhältnis 1:1 ist.

11. Linearbewegungsvorrichtung nach einem der Ansprüche 3 bis 10,
**dadurch gekennzeichnet, dass** die ersten Abrollmittel (42, 44), welche mit Linearbewegungseinheiten (12, 14) zur gemeinsamen Linearbewegung verbunden sind, die in Richtung der Linearbewegungsachse (L) unmittelbar benachbart sind, einen unterschiedlichen Umfang aufweisen ist oder/und dass die zweiten Abrollmittel (42, 48), welche mit Linearbewegungseinheiten (12, 14) zur gemeinsamen Linearbewegung verbunden sind, die in Richtung der Linearbewegungsachse (L) unmittelbar benachbart sind, einen unterschiedlichen Umfang aufweisen.

12. Linearbewegungsvorrichtung nach Anspruch 11,
**dadurch gekennzeichnet, dass** der Umfang der ersten Abrollmittel (42, 44) in einer Richtung längs der Linearbewegungsachse (L) von einer Linearbewegungseinheit (12, 14) zur nächsten unmittelbar benachbarten Linearbewegungseinheit (12, 14) zunimmt oder/und dass der Umfang von zweiten Abrollmitteln (46, 48) in derselben Richtung längs der Linearbewegungsachse (L) von einer Linearbewegungseinheit (12, 14) zur nächsten unmittelbar benachbarten Linearbewegungseinheit (12, 14) abnimmt.

13. Linearbewegungsvorrichtung nach einem der Ansprüche 3 bis 12,
**dadurch gekennzeichnet, dass** sie eine erste Direkt-Linearbewegungseinheit (18) umfasst, welche ohne Zwischenanordnung von Abrollmitteln (42, 44, 46, 48) unmittelbar mit der ersten Abrollbahn (36) zur gemeinsamen Bewegung mit dieser gekoppelt ist oder/und dass sie eine zweite Direkt-Linearbewegungseinheit (20) umfasst, welche ohne Zwischenanordnung von Abrollmitteln (42, 44, 46, 48) unmittelbar mit der zweiten Abrollbahn (48) zur gemeinsamen Bewegung mit dieser gekoppelt ist.

14. Linearbewegungsvorrichtung nach einem der Ansprüche 3 bis 13,
**dadurch gekennzeichnet, dass** die Bewegung übertragende Wirkverbindung zwischen den ersten Abrollmitteln (42, 44) und der ersten Abrollbahn (36) oder/und zwischen den zweiten Abrollmitteln (46, 48) und der zweiten Abrollbahn (38) ein Abrolleingriff ist, insbesondere ein reibschlüssiger Abrolleingriff oder bevorzugt ein formschlüssiger kämmender Abrolleingriff ist, wobei besonders bevorzugt die erste oder/und die zweite Abrollbahn (36, 38) ein Zahnriemen (36, 38) ist und die ersten oder/und die zweiten Abrollmittel (42, 44, 46, 48) mit dem Zahnriemen (34, 36) kämmende Zahnräder (42, 44, 46, 48) sind.

15. Linearbewegungsvorrichtung nach einem der vorhergehenden Ansprüche,
**dadurch gekennzeichnet, dass** sie mehr als zwei Linearbewegungseinheiten (12, 14) umfasst.

16. Linearbewegungsvorrichtung nach einem der vorhergehenden Ansprüche,
**dadurch gekennzeichnet, dass** sie mehr als eine längs der Linearbewegungsachse (L) verlaufende Linearführungsschiene (24, 26) aufweist, wobei längs der Linearbewegungsachse (L) unmittelbar aufeinander folgende Linearbewegungseinheiten (12, 14) an unterschiedlichen Linearführungsschienen (24, 26) geführt sind.

## Claims

1. Linear movement device with at least two linear movement units (12, 14) guided movably along a common linear movement axis (L), said linear movement device (10) comprising a first linear drive (28) and a second linear drive (30), wherein, when the first and the second linear drives (28, 30) are activated simultaneously, all linear movement units (12, 14) can be driven at least for an unidirectional movement along said linear movement axis (L) without any relative speed to one another,
**characterized in that** said linear movement device (10) comprises the first linear drive (28) and the second linear drive (30) in such a way that each linear movement unit (12, 14) can be driven only by the first linear drive (28) as well as only by the second linear drive (30) as well as jointly by both linear drives (28, 30) for a movement along said linear movement axis (L), wherein the first and the second linear drive (28, 30) are coupled to the linear movement units (12, 14) transferring drive force in such a way that, when only the first linear drive (28) or only the second linear drive (30) is activated, the linear movement units (12, 14) can be driven for a movement in the same direction along the linear movement axis (L) with a relative speed to one another.

2. Linear movement device according to claim 1,
**characterized in that** in addition, depending on the operating status of both linear drives (28, 30), at least all linear movement units (12, 14) except for one, preferably all linear movement units (12, 14) can be driven for a movement with relative speed to one another along said linear movement axis (L) or that all linear movement units (12, 14), can be driven for a movement without relative speed to one another along said linear movement axis (L).

3. Linear movement device according to claim 2,
**characterized in that** when the first and the second linear drives (28, 30) are activated simultaneously, all linear movement units (12, 14) can, depending on the operating status of the linear drives (28, 30) be driven for a movement without relative speed to one another in the same direction or for a movement with relative speed to one another in the same direction, or that a first part of the at least two linear movement units (12, 14) can be driven for movement in a first direction and a second part of the at least two linear movement units (12, 14) can be driven for movement in a second direction opposed to the first direction along the linear movement axis (L).

4. Linear movement device according to one of claims 1 to 3,
**characterized in that** the first linear drive (28) is, by a first rollway (36) in operative connection with a plurality of first rolling means (42, 44), transferring a movement, wherein each of the at least two linear movement units (12, 14) is connected to at least one first rolling means (42, 44) for a joint linear movement along said linear movement axis (L), wherein furthermore the second linear drive (30) which is different from the first linear drive, is, by a second rollway (38) which is different from the first rollway, in operative connection with a plurality of second rolling means (46, 48), transferring a movement, wherein each of the at least two linear movement units (12, 14) is connected to at least one of the second rolling means (46, 48) for a joint linear movement along the linear movement axis (L), wherein each rollway (36, 38) can be driven for movement by the linear drive (28, 30) coupled to it, wherein the first rolling means (42, 44) can be driven for movement by the first rollway (36) which is in operative connection with them, wherein the second rolling means (42, 48) can be driven for movement by the second rollway (38) which is in operative connection with them, and wherein for each linear movement unit (12, 14) the first and the second rolling means (42, 44, 46, 48) connected to it for a joint linear movement are or can be brought in a predetermined relative movement relation to one another in such a way that the first rolling means (42, 44) can be driven for movement by the second rollway (38) and the second rolling means (46, 48) can be driven for movement by the first rollway (38).

5. Linear movement device according to claim 4,
**characterized in that in that** a first rolling means (42, 44) connected to a linear movement unit (12, 14) for a joint linear movement is received rotatably in relation to the linear movement unit (12, 14) at the latter about a first axis of rotation (D12, D14) which cannot be moved in relation to said linear movement unit (12, 14).

6. Linear movement device according to claim 4 or 5,
**characterized in that** a second rolling means (46, 48) connected to a linear movement unit (12, 14) for a joint linear movement is received rotatably in relation to the linear movement unit (12, 14) at the latter about a second axis of rotation (D12, D14) which cannot be moved in relation to said linear movement unit (12, 14).

7. Linear movement device according to claim 5 and 6,
**characterized in that** the first and the second axis of rotation (D12, D14) are collinear.

8. Linear movement device according to claims 5 and 6 or according to claim 7,
**characterized in that** the first and the second rolling means (42, 44, 46, 48) of a linear movement unit (12, 14) are coupled to one another with a predetermined speed transmission ratio as the predetermined relative movement relation.

9. Linear movement device according to claim 8,
**characterized in that** the speed transmission ratio is the same for several, preferably all, linear movement units (12, 14) which are connected for a joint linear movement with a first and a second rolling means (42, 44, 46, 48).

10. Linear movement device according to claim 8 or 9,
**characterized in that** the speed transmission ratio is 1:1.

11. Linear movement device according to one of claims 3 to 10,
**characterized in that** the first rolling means (42, 44) which are connected to linear movement units (12, 14) for a joint linear movement, directly adjacent in the direction of the linear movement axis (L), have a different circumference or/and **in that** the second rolling means (42, 48) which are connected to linear movement units (12, 14) for a joint linear movement, directly adjacent in the direction of the linear movement axis (L), have a different circumference.

12. Linear movement device according to claim 11,
**characterized in that** the circumference of the first rolling means (42, 44) increases in a direction along the linear movement axis (L) from one linear movement unit (12, 14) to the next immediately adjacent linear movement unit (12, 14) or/and **in that** the circumference of second rolling means (46, 48) decreases in the same direction along the linear movement axis (L) from one linear movement unit (12, 14) to the next immediately adjacent linear movement unit (12, 14).

13. Linear movement device according to one of claims 3 to 12,
**characterized in that** it comprises a first direct linear movement unit (18) which without any intermediate arrangement of rolling means (42, 44, 46, 48) is directly coupled to the first rollway (36) for a joint movement or/and **in that** it comprises a second direct linear movement unit (20) which without any intermediate arrangement of rolling means (42, 44, 46, 48) is directly coupled to the second rollway (48) for a joint movement.

14. Linear movement device according to one of claims 3 to 13,
**characterized in that** the operative connection transferring the movement between the first rolling means (42, 44) and the first rollway (36) or/and between the second rolling means (46, 48) and the second rollway (38) is a rolling engagement, in particular a frictionally rolling engagement or preferably a form-fit meshing rolling engagement, wherein it is particularly preferred that the first or/and the second rollway (36, 38) is a toothed belt (36, 38) and the first or/and the second rolling means (42, 44, 46, 48) are gearwheels (42, 44, 46, 48) intermeshing with the toothed belt (34, 36).

15. Linear movement device according to one of the preceding claims,
**characterized in that** it comprises more than two linear movement units (12, 14).

16. Linear movement device according to one of the preceding claims,
**characterized in that** it comprises more than one linear guiding rail (24, 26) extending along the linear movement axis (L), wherein linear movement units (12, 14) in direct sequence along said linear movement axis (L) are guided at different linear guiding rails (24, 26).

## Revendications

1. Dispositif de mouvement linéaire avec au moins deux unités de mouvement linéaire (12, 14) qui sont guidées de manière mobile le long d'un axe de mouvement linéaire (L) commun, le dispositif de mouvement linéaire (10) comprenant un premier actionneur linéaire (28) et un deuxième actionneur linéaire (30), où, quand le premier et le deuxième actionneur linéaire (28, 30) sont activés en même temps, toutes les unités de mouvement linéaire (12, 14) peuvent être entraînées à au moins un mouvement unidirectionnel commun le long de l'axe de mouvement linéaire (L) sans vitesse relative l'une par rapport à l'autre,
**caractérisé en ce que** le dispositif de mouvement linéaire (10) comprend le premier actionneur linéaire (28) et le deuxième actionneur linéaire (30) de sorte que chaque unité de mouvement linéaire (12, 14) peut être entraînée par le premier actionneur linéaire (28) seul ou par le deuxième actionneur linéaire (30) seul ou par les deux actionneurs linéaires (28, 30) à un mouvement le long de l'axe de mouvement linéaire (L), le premier et le deuxième actionneur linéaires (28, 30) étant couplés aux unités de mouvement linéaire (12, 14) en transférant la force d'entraînement de sorte que lorsque seulement le premier actionneur linéaire (28) est activé ou lorsque seulement le deuxième actionneur linéaire (30) est activé, les unités de mouvement linéaire (12, 14) peuvent être entraînés à un mouvement dans la même direction le long de l'axe de mouvement linéaire (L) avec une vitesse relative l'une par rapport à l'autre.

2. Dispositif de mouvement linéaire selon la revendication 1,
**caractérisé en ce qu'**en outre, en fonction de l'état opératoire des deux actionneurs linéaires (28, 30) au moins toutes les unités de mouvement linéaire (12, 14) sauf une, de préférence toutes les unités de mouvement linéaire (12, 14) peuvent être entraînées à un mouvement avec une vitesse relative l'une par rapport à l'autre le long de l'axe de mouvement linéaire (L) ou que toutes les unités de mouvement linéaire (12, 14) peuvent être entraînées à un mouvement sans vitesse relative l'une par rapport à l'autre le long de l'axe de mouvement linéaire (L).

3. Dispositif de mouvement linéaire selon la revendication 2,
**caractérisé en ce que** lors d'une activation simultanée du premier et du deuxième actionneur linéaire (28, 30) toutes les unités de mouvement linéaire (12, 14) peuvent, en fonction de l'état opératoire des deux actionneurs linéaires (28, 30) être entraînées à un mouvement sans vitesse relative l'une par rapport à l'autre dans un même sens ou à un mouvement avec une vitesse relative l'une par rapport à l'autre dans un même sens, ou qu'une première partie desdites au moins deux unités de mouvement linéaire (12, 14) peut être entraînée à un mouvement dans un premier sens et qu'une deuxième partie desdites au moins deux unités de mouvement linéaire (12, 14) peut être entraînée à un mouvement dans un deuxième sens opposé au premier sens le long de l'axe de mouvement linéaire (L).

4. Dispositif de mouvement linéaire selon une des revendications 1 à 3,
**caractérisé en ce que** le premier actionneur linéaire (28) possède, par une première voie de déroulement (36) une connexion opérative avec une pluralité de premiers moyens de déroulement (42, 44), transférant un mouvement, chacune desdites au moins deux unités de mouvement linéaire (12, 14) étant connectée à au moins un premier moyen de déroulement (42, 44) pour un mouvement linéaire conjoint le long de l'axe de mouvement linéaire (L), où en outre le deuxième actionneur linéaire (30), différent du premier, possède, par une deuxième voie de déroulement (38), différente de la première, une connexion opérative avec une pluralité de deuxièmes moyens de déroulement (46, 48), transférant un mouvement, chacune desdites au moins deux unités de mouvement linéaire (12, 14) étant connectée à au moins un deuxième moyen de déroulement (46, 48) pour un mouvement linéaire conjoint le long de l'axe de mouvement linéaire (L), où chaque voie de déroulement (36, 38) peut être mise en mouvement par l'actionneur linéaire (28, 30) accouplé, où les premiers moyens de déroulement (42, 44) peuvent être mis en mouvement par la première voie de déroulement (36) en connexion opérative avec eux, où les deuxièmes moyens de déroulement (42, 48) peuvent être mis en mouvement par la deuxième voie de déroulement (38) en connexion opérative avec eux, et où pour chaque unité de mouvement linéaire (12, 14) le premier et le deuxième moyen de déroulement (42, 44, 46, 48) connectés pour un mouvement linéaire conjoint se trouvent ou peuvent être amenés dans une relation de mouvement relative prédéterminée de sorte que le premier moyen de déroulement (42, 44) peut être mis en mouvement par la deuxième voie de déroulement (38) et que le deuxième moyen de déroulement (46, 48) peut être mis en mouvement par la première voie de déroulement (38).

5. Dispositif de mouvement linéaire selon la revendication 4,
**caractérisé en ce qu'**un premier moyen de déroulement (42, 44) connecté à une unité de mouvement linéaire (12, 14) pour un mouvement linéaire conjoint est reçu de manière rotative en relation à l'unité de mouvement linéaire (12, 14) autour d'un premier axe de rotation (D12, D14) qui est immobile par rapport à l'unité de mouvement linéaire (12, 14).

6. Dispositif de mouvement linéaire selon la revendication 4 ou 5,
**caractérisé en ce qu'**un deuxième moyen de déroulement (46, 48) connecté à une unité de mouvement linéaire (12, 14) pour un mouvement linéaire conjoint est reçu de manière rotative en relation à l'unité de mouvement linéaire (12, 14) autour d'un deuxième axe de rotation (D12, D14) qui est immobile par rapport à l'unité de mouvement linéaire (12, 14).

7. Dispositif de mouvement linéaire selon la revendication 5 et 6,
**caractérisé en ce que** le premier et le deuxième axe de rotation (D12, D14) sont colinéaires.

8. Dispositif de mouvement linéaire selon les revendication 5 et 6 ou selon la revendication 7,
**caractérisé en ce que** le premier et le deuxième moyen de déroulement (42, 44, 46, 48) d'une unité de mouvement linéaire (12, 14) sont accouplés avec un rapport de transmission de vitesse prédéterminé comme relation de mouvement relatif prédéterminée.

9. Dispositif de mouvement linéaire selon la revendication 8,
**caractérisé en ce que** le rapport de transmission de vitesse est le même à plusieurs, de préférence à toutes les unités de mouvement linéaire (12, 14) connectées à un premier et un deuxième moyen de déroulement (42, 44, 46, 48) pour un mouvement linéaire conjoint.

10. Dispositif de mouvement linéaire selon la revendication 8 ou 9,
**caractérisé en ce que** le rapport de transmission de vitesse est 1:1.

11. Dispositif de mouvement linéaire selon une des revendications 3 à 10,
**caractérisé en ce que** les premiers moyens de déroulement (42, 44) connectés à des unités de mouvement linéaire (12, 14) pour un mouvement linéaire conjoint, immédiatement adjacentes dans la direction de l'axe de mouvement linéaire (L) ont un périmètre différent ou/et que les deuxièmes moyens de déroulement (42, 48) connectés à des unités de mouvement linéaire (12, 14) pour un mouvement linéaire conjoint, immédiatement adjacentes dans la direction de l'axe de mouvement linéaire (L) ont un périmètre différent.

12. Dispositif de mouvement linéaire selon la revendication 11,
**caractérisé en ce que** le périmètre des premiers moyens de déroulement (42, 44) augmente dans une direction le long de l'axe de mouvement linéaire (L) d'une unité de mouvement linéaire (12, 14) à la prochaine unité de mouvement linéaire (12, 14) directement adjacente ou/et que le périmètre des deuxièmes moyens de déroulement (46, 48) diminue dans la même direction le long de l'axe de mouvement linéaire (L) d'une unité de mouvement linéaire (12, 14) à la prochaine unité de mouvement linéaire (12, 14) directement adjacente.

13. Dispositif de mouvement linéaire selon une des revendications 3 à 12,
**caractérisé en ce qu'**il comprend une première unité de mouvement linéaire direct (18) qui est accouplée directement à la première voie de déroulement (36) sans arrangement intermédiaire de moyens de déroulement (42, 44, 46, 48) pour un mouvement linéaire conjoint ou/et qu'il comprend une deuxième unité de mouvement linéaire direct (20) qui est accouplée directement à la deuxième voie de déroulement (48) sans arrangement intermédiaire de moyens de déroulement (42, 44, 46, 48) pour un mouvement linéaire conjoint.

14. Dispositif de mouvement linéaire selon une des revendications 3 à 13,
**caractérisé en ce que** la connexion opératoire transférant un mouvement entre les premiers moyens de déroulement (42, 44) et la première voie de déroulement (36) ou/et entre les deuxièmes moyens de déroulement (46, 48) et la deuxième voie de déroulement (38) est un engagement de déroulement, en particulier un engagement de déroulement par friction ou de préférence un engagement de déroulement solidaire de forme en engrènement, où il est particulièrement préféré que la première ou/et la deuxième voie de déroulement (36, 38) soit une courroie dentée (36, 38) et que les premiers ou/et les deuxièmes moyens de déroulement (42, 44, 46, 48) soient des roues dentées (42, 44, 46, 48) en engrènement avec la courroie dentée (34, 36).

15. Dispositif de mouvement linéaire selon une des revendications précédentes,
**caractérisé en ce qu'**il comprend plus de deux unités de mouvement linéaire (12,14).

16. Dispositif de mouvement linéaire selon une des revendications précédentes,
**caractérisé en ce qu'**il comprend plus d'un rail de guidage linéaire (24, 26) s'étendant le long de l'axe de mouvement linéaire (L), et où des unités de mouvement linéaire (12, 14) directement consécutives le long de l'axe de mouvement linéaire (L) sont guidées à des rails de guidage linéaire (24, 26) différents.
